# EUROPEAN PATENT APPLICATION

(11) **EP 1 777 924 A1**
(43) Date of publication of application: **25.04.2007**
(21) Application number: 06255341.7
(22) Date of filing: 17.10.2006
(51) Int. Cl.: H04M 1/02

(54) **Portable and rotatable electronic device with biasing mechanism**

(30) Priority: 18.10.2005 US 253017
(71) Applicant: Nokia Corporation, 02150 Espoo (FI)
(72) Inventor: Teuri, Tommi, 25570, Teijo (FI); Muschik, Thomas, 89075, Ulm (DE); Ejiogu, Catherine, 89081, Ulm (DE)
(74) Representative: Higgin, Paul

(57) **Abstract**

A portable electronic device (1), including a user-operable input device (5) on a first face (4) of a first housing portion (2), a display (8) on a first face of a second housing portion (3), and a digital camera lens, the second housing portion being configured for a pivotal movement in relation to the first housing portion, allowing the user to switch between two operational modes. Preferably, when configured in a first position, the portable electronic device operates in the first mode, idle mode or camera mode. When configured in a second position, the portable electronic device operates in the second mode, keypad mode.

## Description

### Field of the invention

The present invention relates to a portable electronic device, particularly, but not exclusively, to a mobile communications device.

### Background art

Some form of conventional portable electronic devices, particularly mobile communication devices, have either an extendible or foldable two-part construction which allows the device to be extended or folded open for use, then closed again for storage. These types of construction help to maximize the surface area available for supporting a keypad and a display, while minimizing the size of the device when closed.
However known mobile phones are not configured to support both left and right-hand users at the same time.

The present invention provides a portable electronic device of the swivel form. The swivel phone according to our invention is further configured to be used by both right-handed and left-handed users. Furthermore the portable electronic device has a biasing mechanism, which assists the user in folding or unfolding the device.

### Summary of the invention

It is an aim of the present invention to provide an improvement to the prior art. In particular, the aim is to present an improved portable electronic swivel device that allows the user to operate the device in a smoother semi automatic manner using only one hand, and designed to suit the user being left-handed or right-handed. Another object of the invention is that the mobile terminal is, with respect to its mechanical structure, easy to use, durable and ergonomic.

According to the present invention there is provided a mobile terminal comprising a first housing portion supporting a user-operable input device on a first face and a second housing portion, the second housing portion being coupled to the first housing portion, and the second housing portion being configured for pivotal movement over the first face of the first housing portion between a first position in which the user-operable input device is concealed and a second position in which the user-operable input device is exposed.

Generally, the second housing portion substantially covers the first housing portion in the first position and the user-operable input device substantially covers the first face of the first housing portion.

According to the present invention the user-operable input device may comprise a keypad having a plurality of keys and may further comprise soft keys.

According to the present invention the second housing portion may have a region for receiving a display on a face relatively far from the first housing portion. Furthermore the display substantially covers the far face of the second housing.

According to the present invention there is also provided a mobile terminal further comprising an image capturing device.

According to the present invention there is further provided a mobile terminal having a first housing portion supporting a user-operable input device on a first face and a second housing portion, the second housing portion being coupled to the first housing portion and being configured for clockwise and anticlockwise pivotal movement in relation to the first housing portion.

The angle between the first housing portion and the second housing portion can be every value from -180 to 180 degrees.

According to the invention, the mobile terminal is further comprising a processor responsive, when the second housing portion is in the first position, to operate in a first mode, and when the second housing portion is in the second position, to operate in a second mode.

According to the invention, the mobile terminal is further comprising a biasing mechanism for biasing the second housing portion towards a first position from an interposition between the first and second position and for biasing the second housing portion towards a second position from an interposition between the first and second position. The interposition is generally closest to the first position.

### Brief description of the drawings

In order that the invention may be more fully understood, an embodiment thereof wil now be described by way of example with reference to the accompanying drawings in which:
Figure 1 is a mobile terminal in the first position according to the present invention;
Figure 2 is a mobile terminal in the second position according to the present invention;
Figure 3a shows the location of the clockwise interposition;
Figure 3b shows the location of the anticlockwise interposition and
Figure 4 shows the biasing module in the form of a swivel hinge in idle.
Figure 5 shows a representation of the biasing mechanism of the swivel hinge.

### Detailed description of the invention

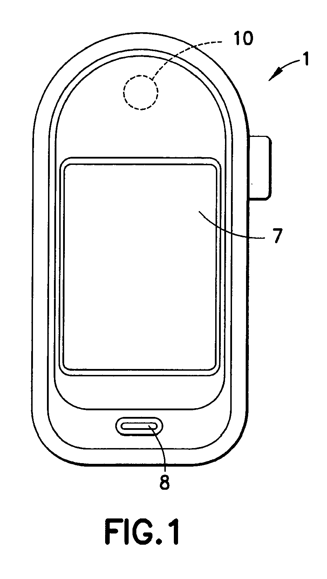

A preferred embodiment of the mobile terminal 1 of the invention is shown in figures 1-5. The mobile terminal 1 is in the form of a mobile communications device having a plurality of functions including, among others, mobile telephony and handheld computing. The mobile terminal 1 may have additional and/or different functions. The mobile terminal 1 may be in the form of another type of portable electronic device, such as a handheld computing device, a radio broadcast receiving device or a content rendering device, such as a digital versatile disk (DVD) player.

The mobile terminal 1 comprises a first housing portion 2 and a second housing portion 3 being coupled to the first housing portion 2. The first housing portion comprises a user-operable input device on the first face 4 in the form of a keypad 5 having a plurality of keys 6 further comprising soft keys 7. However other forms of input device or other keypad configurations may be used. The keypad 5 substantially covers the first face 4 of the first housing portion 2, although it need not do so.

The first housing portion 2 also comprises an image capturing device in the form of a camera (not shown) on a face opposed to said first face 4.

The second housing portion 3 comprises a liquid crystal display (LCD) device 8 located on a face relatively far from the first housing portion 2. The display device 8 substantially covers the upper face of the second housing portion 3. The second housing portion 3 further comprises a speaker 9.

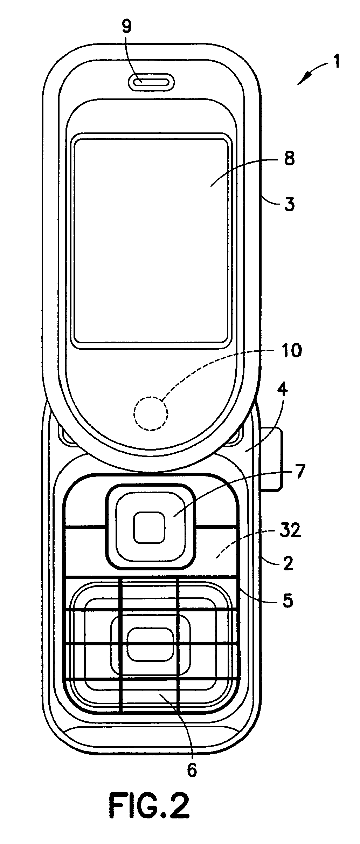

The second housing portion 3 are configured for pivotal movement over the first face 4 of the first housing portion 2 between a first position in which the keypad 5 is concealed (FIG. 1) and a second position in which the keypad 5 is exposed (FIG. 2). Referring to Figure 2, the mobile terminal 1 is shown with the second housing portion 3 in the second position. In this position, the previously concealed keypad 5 and the first face 4 of the first housing portion 2 are revealed.

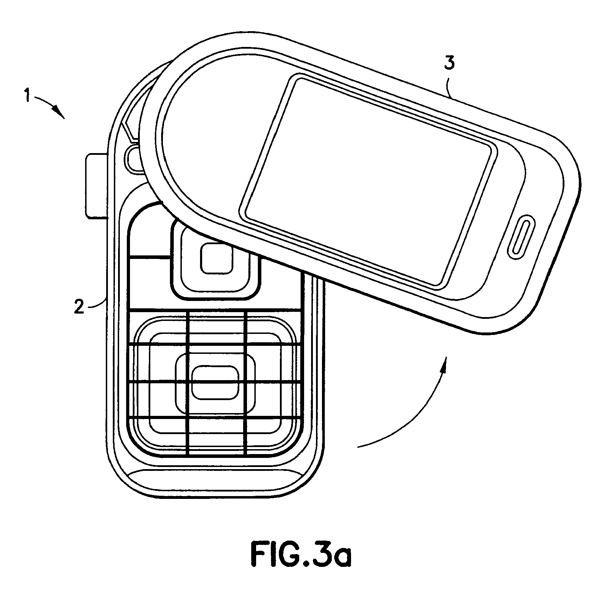

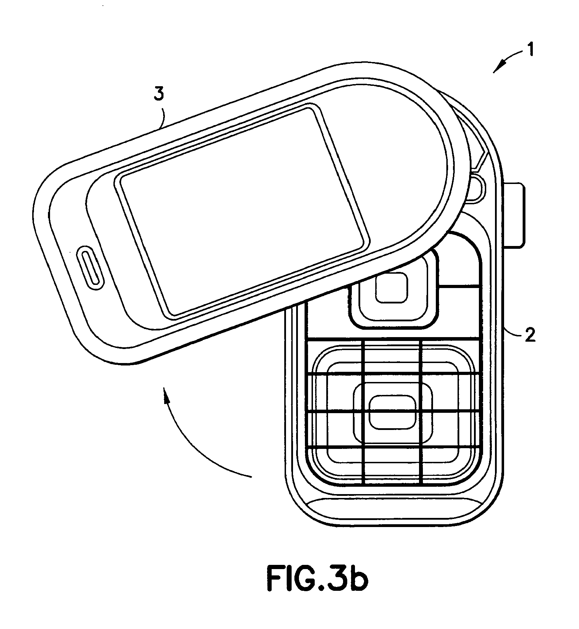

When the second housing portion 3 is in the first position, the mobile terminal 1 is in a relatively compact state for convenient storage, for example in a user's pocket. The user may want to extend the mobile terminal 1 for convenient access to functions, such as telephony. Therefore, the user pushes the second housing portion 3 over the face 4 of the first housing portion 2 until it reaches an interposition. This action is illustrated in Figure 3a and 3b. The interposition is located between the first and the second position. In this embodiment the interposition is closest to the first position, but could be anywhere between the first and second position. When the second housing portion 3 has reached the interposition due to an active push from the user, a biasing mechanism finishes this action and brings the second housing portion 3 in the second position.

The second housing portion 3 can swivel from the first position to the second position following a clockwise or anti-clockwise path. The second housing portion 3 may be returned to the first position by inversing the steps. The angle between the swiveling second housing portion 3 and the first housing portion 2 may be every value between -180 and 180 degrees, given that the angle between the first housing portion 2 and the second housing portion 3 when in the first position is 0 degrees.

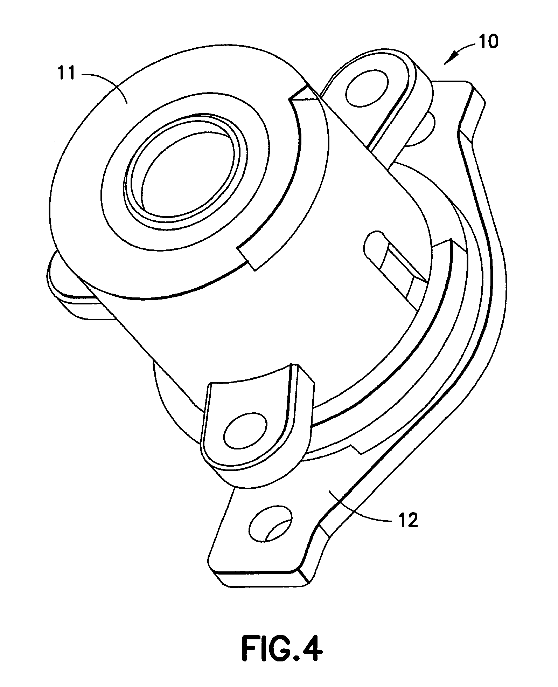

Referring to Figure 4 a swivel hinge 10 is provided. The swivel part 12 of the hinge 10 is locked into a recess (not shown) in the second housing portion 3, while the stationary part 11 of the hinge 10 is fastened to the first housing portion 2 of the mobile terminal 1. The swivel hinge 10 shown in figure 4 is in idle (0 degree).

The swivel part 12 is configured to rotate 180 degrees in two opposite directions from idle. However the swivel part 12 may not rotate 360 degrees. There is also provided two interpositions between 0 and 180 degrees, and between 0 and -180 degrees, respectively. Each interposition is configured to be close to idle. Preferably the interpositions are configured to be in the interval of 10 to 45 degrees, and -10 to -45 degrees respectively from idle.

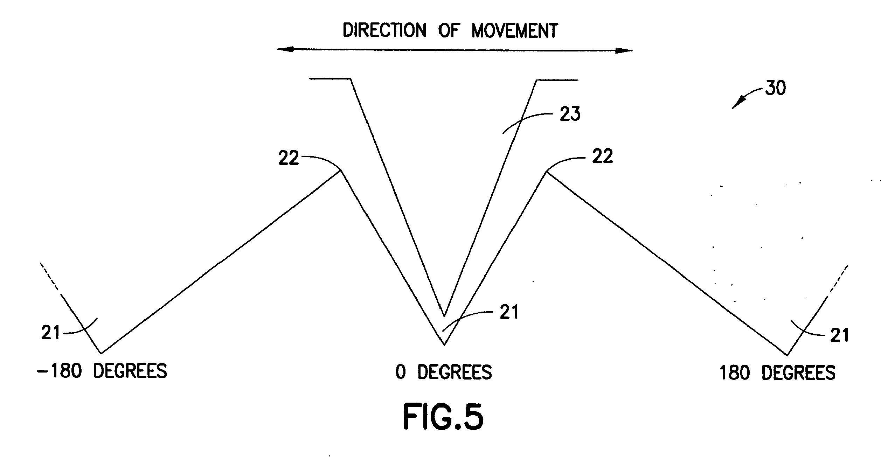

The stationary part 11 of the swivel hinge 10 also comprises a biasing mechanism 30 (Fig. 5). The biasing mechanism is configured to rotate the swivel part 11 from one interposition to 180 degrees and from another interposition to -180 degrees. When the angle between the stationary part 11 and the swivel part 12 of the hinge 10 is 180 or -180 degrees, the swivel part 12 may rotate back to idle by inversing the steps. The biasing mechanism further assists the swivel part 12 to return to idle after the return is initiated by the user.

In Figure 5 the biasing mechanism of the swivel hinge 10 is shown. A semi automatic guiding mechanism 30 is provided in the swivel part 12 of the swivel hinge 10, and a pin 23 is provided in the stationary part 11 of the swivel hinge 10. The pin 23 is set to engage with the guiding mechanism.

According to another embodiment of the present invention, the guiding mechanism may be provided in the stationary part 11 of the swivel hinge 10, while the pin 23 is provided in the swivel part 12 of the swivel hinge 10.

The guiding mechanism 30 comprises three recesses 21 and two independent top hills 22 which function to form the interpositions. The recesses 21 are substantially of the same depth. Each recess 21 represents a stable state of swivel. When the pin 23 is located in the recess 21 labeled "0 degrees", the swivel hinge 10 will be in idle and the mobile terminal will be in the first position according to the invention (Figure 1). When the pin 23 is located in the recess 21 labeled "180 degrees" or the recess 21 labeled "-180 degrees" the mobile terminal will be in the second position according to the invention (Figure 2).

According to another embodiment of the present invention, a fourth recess labeled "90 degrees" may be provided between the two recesses 21 labeled "180 degrees" and "0 degrees". Accordingly a fifth recess labeled "-90 degrees" may be provided between the two recesses 21 labeled "0 degrees" and "-180 degrees". This would result in having a third position of the mobile terminal 1, where the first housing portion 2 forms an angle of 90 degrees with the second housing portion 3.

As shown in figure 5, the length of the slope of a recess 21 determines how close the interposition at top hills 22 is from idle (0 degrees) and thereby determines how far the user should swivel the housing part 3 manually before the biasing mechanism takes over and terminates the action automatically without any further assistance from the user. According to the present invention, the slope of the recesses 21 may be different from one recess to another in one embodiment as well as they might be equal in another embodiment. According to the embodiment shown in figure 5, the two recesses 21 labeled "180 degrees" and "-180 degrees" have slopes of equal lengths, while the slope of the recess labeled "0 degrees" has a different length.

The pin 23 is continuously pressed against the guiding mechanism of the swivel part 12 by a spring mechanism (not shown). To change the position of the mobile terminal 1 from the first position to the second position according to the invention, the user manually rotates the second housing portion 3 including the guiding mechanism of the the swivel part 12, making the pin 23 move from the recess 21 labeled "0 degrees" towards one of the two top hills 22, depending on whether the user chooses a clockwise or anticlockwise rotation. Once the pin 23 has reached the top hill 22, the pin 23 is forced towards the corresponding recess 21 by the force applied by the spring mechanism that continuously presses the pin 23 against the guiding mechanism. Thus the second housing portion 3 will swivel into the second position according to the invention without any further assistance from the user. Similar steps are applied to change the position of the mobile terminal 1 from the second position to the first position according to the invention. With the invention the user merely needs to actively move the second housing portion 3 until it reaches one of the two interpositions (when the peak of the pin 23 reaches the peak of the top hills 22. After that, such as when opening the mobile mobile terminal from the position shown in Fig. 1 to the position shown in Fig. 2, the spring biased pin 23 and the shapes of the guide mechanism 30 and the pin 23 will automatically move the two parts 11, 12 relative to each other to laterially flip the second housing portion 3 to its final position (Fig. 2) relative to the first housing portion 2.

The mobile terminal 1 comprises a processor 32. The processor 32 is responsive, when the second housing portion is in the first position, to operate in a first mode, and when the second housing portion is in the second position, to operate in a second mode. The first mode could comprise, for example, generating a ring tone for an incoming call. The second mode could comprise generating a three way calling or call waiting tone for an incoming call.

Obviously the above described embodiments are presented by way of example only, and do not restrict the invention. For example, most of the mechanical parts can be moved from one part of the telephone to another without changing the scope of protection.

## Claims

1. A portable electronic device comprising a first housing portion having a user-operable input device on a first face and a second housing portion, the second housing portion being coupled to the first housing portion, for being rotatable in parallel relatively to each other between a first position in which the user-operable input device is concealed and a second position in which the user-operable input device is exposed, further comprising a biasing mechanism for biasing the second housing portion towards the first position from an interposition between the first and second position and for biasing the second housing portion towards the second position from an interposition between the first and second position.

2. A portable electronic device according to claim 1, wherein the second housing portion substantially covers the first face of the first housing portion in the first position.

3. A portable electronic device according to claim 1, wherein the user-operable input device substantially covers the first face of the first housing portion.

4. A portable electronic device according to claim 1, wherein the user-operable input device comprises a keypad.

5. A portable electronic device according to claim 1, wherein the second housing portion comprises a display on a face relatively far from the first housing portion.

6. A portable electronic device according to claim 1, wherein the display substantially covers the far face of the second housing.

7. A portable electronic device according to claim 1, further comprising an image capturing device.

8. A portable electronic device according to claim 1, wherein the second housing portion being configured for clockwise and anticlockwise pivotal movement in relation to the first housing portion.

9. A portable electronic device according to claim 1, wherein the angle between the first housing portion and the second housing portion can be every value from -180 to 180 degrees.

10. A portable electronic device according to claim 1, further comprising a processor responsive, when the second housing portion is in the first position, to operate in a first mode, and when the second housing portion is in the second position, to operate in a second mode.

11. A portable electronic device comprising a first housing portion supporting a user-operable input device on a first face and a second housing portion, the second housing portion being coupled to the first housing portion, and the second housing portion being configured for pivotal movement over the first face of the first housing portion between a first collapsed position in which the user-operable input device is concealed and a second expanded position in which the user-operable input device is exposed, further comprising a swivel hinge being configured to rotate 180 degrees in two opposite directions, said swivel hinge including a biasing mechanism assisting the user when going from the first collapsed position to the second expanded position, and from the second expanded position to the first collapsed position of the portable electronic device.

12. A portable electronic device according to claim 12, wherein the biasing mechanism takes effect from an interposition located between the first collapsed position and the second expanded position of the portable electronic device.

13. A portable electronic device according to claim 12, wherein the interposition is located closer to the first collapsed position of the portable electronic device.

14. A portable electronic device according to claim 12, wherein the biasing mechanism is a spring mechanism.
